# EUROPEAN PATENT APPLICATION

(11) **EP 1 944 120 A2**
(43) Date of publication of application: **16.07.2008**
(21) Application number: 07252768.2
(22) Date of filing: 11.07.2007
(51) Int. Cl.: B23P 6/00, F01D 5/00, B23K 101/00

(54) **Weld repair of metallic components**

(30) Priority: 28.07.2006 US 494886
(71) Applicant: United Technologies Corporation, Hartford, CT 06101 (US)
(72) Inventor: Lutz, Andrew J., Glastonbury, CT (US); Frost, Aaron T., San Antonio, TX 78251 (US)
(74) Representative: Leckey, David Herbert

(57) **Abstract**

Methods for repairing metallic components are described herein and comprise: removing coatings from the component; removing the damage from the component; welding the component; restoring the original dimensions of the component; heat treating the component; inspecting the component; and recoating the component.

## Description

### FIELD OF THE INVENTION

The present invention relates generally to methods of repairing metallic components. More specifically, the present invention relates to methods of weld repairing industrial gas turbine blades that were previously unrepairable.

### BACKGROUND OF THE INVENTION

Gas turbine engines have long been used to propel aircraft, generate electric power, pump fluids, etc. The turbine sections of such engines comprise alternating rows of static vanes and rotating blades. During operation, abrasives and corrosives in the hot gas flow impinge upon these blades and vanes, causing them to deteriorate, erode or become otherwise damaged. Therefore, during periodic engine overhauls, these components are inspected for physical damage and are evaluated to determine whether they need to be repaired or replaced before the engine can be returned to service.

While there are many different methods for repairing various portions of these turbine blades, not all damage can be repaired by existing repair methods. Therefore, it would be desirable to have methods that allow previously unrepairable turbine blades to be repaired and returned to service in an engine.

### SUMMARY OF THE INVENTION

Accordingly, the above-identified shortcomings of existing repair methods are overcome by embodiments of the present invention, which allows repairs to be made to previously unrepairable turbine blades.

Embodiments of this invention comprise methods for repairing damaged metallic components. An embodiment of the invention comprises: removing coatings from the component; removing the damage from the component; welding the component; restoring the original dimensions of the component; heat treating the component; inspecting the component; and recoating the component.

Further features, aspects and advantages of the present invention will be readily apparent to those skilled in the art during the course of the following description, wherein references are made to the accompanying figures which illustrate some preferred forms of the present invention, and wherein like characters of reference designate like parts throughout the drawings.

### DESCRIPTION OF THE DRAWINGS

The systems and methods of the present invention are described herein below with reference to various figures, in which:
Figure 1 is a block diagram of a method of repairing damage on a turbine blade platform;
Figure 2 is a perspective view of a damaged turbine blade; and
Figure 3 is a perspective view of a turbine blade that has been repaired by embodiments of this invention.

### DETAILED DESCRIPTION OF THE INVENTION

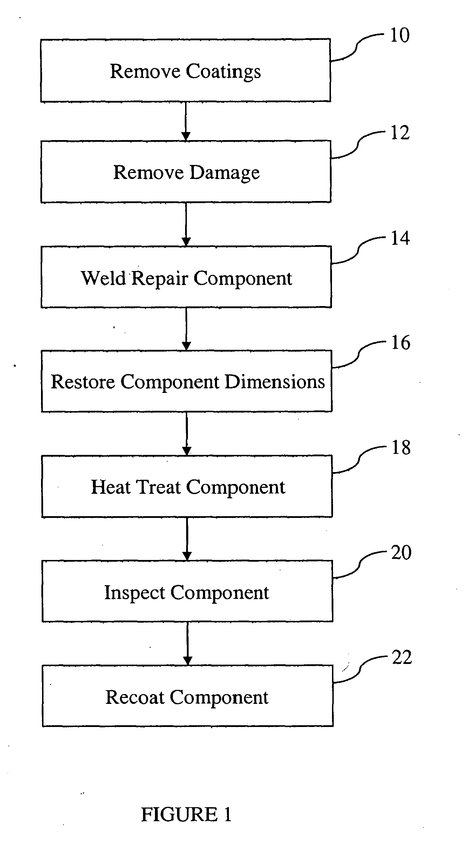

For the purposes of promoting an understanding of the invention, reference will now be made to some preferred embodiments of this invention as illustrated in FIGURES 1-3 and specific language used to describe the same. The terminology used herein is for the purpose of description, not limitation. Specific structural and functional details disclosed herein are not to be interpreted as limiting, but merely as a basis for the claims as a representative basis for teaching one skilled in the art to variously employ the present invention. Any modifications or variations in the depicted structures and methods, and such further applications of the principles of the invention as illustrated herein, as would normally occur to one skilled in the art, are considered to be within the scope of this invention.

This invention comprises methods for repairing a damaged metallic component (e.g. damage to the platform area of previously unrepairable industrial gas turbine blades). Embodiments of this invention provide controlled repair of worn, eroded or otherwise damaged areas of these components to meet precise dimensional and metallurgical requirements. These methods create robust repaired components that can be returned to service in an engine.

As shown in Figure 1, embodiments of these methods may comprise these steps: removing coatings from the component at least in the area proximate the damage (step 10); removing the damage from the component (step 12); welding the component to restore the dimensions of the component back to at least the original dimensions of the component (step 14); returning the dimensions of the component back to the original dimensions of the component (step 16); heat treating the component (step 18); inspecting the component (step 20); and recoating the component where needed (step 22).

In embodiments, these turbine blades may be made of various commercially available alloys, such as the nickel based superalloys PWA 1483, GTD-111^{®}, and/or IN-738. The damage that can be repaired may include cracks, corrosion, erosion, burned areas, foreign object damage (FOD), or any other type of damage that might occur to the platform area of such blades.

In step 10, the coatings may be removed from the desired locations in any suitable manner, such as by grit blasting, machining, belting with abrasives, chemical stripping, waterjet blasting and/or autoclave processing, etc., either alone or in combination. For example, in one non-limiting embodiment, a ceramic coating and McrAlY bond coat may both need to be removed from the area proximate the damage. In some embodiments, the coating(s) on the entire turbine blade may be removed, while in other embodiments, only the coating(s) in the area proximate the damage may be removed. If desired, after coating removal, the component may be cleaned of any residual oxides, debris, organic contaminants, etc. in any suitable manner, such as by vacuum and/or hydrogen heat treating, grinding, rinsing with aqueous or organic solvents, etc.

Next, in step 12, the damage may be removed from the component in any suitable manner, such as by blending, grinding and/or machining away the portion of the platform containing the damage. It has been determined that embodiments of this invention may be used to remove and repair damage to the platform as deep D as 0.300 inches (7.62 mm).

Next, in step 14, the component can be weld repaired to restore the dimensions of the component back to at least the original dimensions of the component. Any suitable type of welding may be used to build up the dimensions of the component, such as, gas tungsten arc welding (TIG welding), laser welding, etc. This weld build up may utilize any suitable type of weld filler material, such as for example, commercially available PWA 795 (a cobalt based MERL 72 material), Inconel 617, IN-939, and/or Inconel 625, either in powder or weld wire form. In one non-limiting embodiment, PWA 795 weld wire having a diameter of about 0.045 inches (about 1.14 mm) may be utilized with TIG welding to build the dimensions of the component back up.

Next, in step 16, the dimensions of the repaired component can be returned to the dimensions of the original component in any suitable manner, such as by machining, grinding, blending, etc.

Next, in step 18, the repaired component can be heat treated in any suitable manner to relieve stresses in the component. In embodiments, the component can be heat treated at about 2050-2175°F (about 1121 - 1191°C) for about 2-4 hours, preferably at about 2050°F (about 1121°C) for about 4 hours. This heat treating may occur in a vacuum, preferably at about 5x10⁴ torr minimum. After the heat treatment is carried out at the desired temperature for the desired period of time, the component can be cooled in any suitable manner. In some embodiments, the component may be rapidly quenched to below about 1000°F (about 538°C). In other embodiments, the component may be cooled to below about 1000°F (about 538°C) at a controlled rate of about 3-40°F (about 1.7 - 22.2°C) /minute.

Next, in step 20, the component can be inspected in any sutiable manner, such as by fluorescent penetrant inspection (FPI), to ensure that the damage/defect has been sufficiently repaired.

Next, in step 22, the component can be recoated in the areas where needed in any suitable manner. In embodiments, this step may include applying a ceramic coating on the component, either with or without a bond coat between the component and the ceramic coating. Any suitable bond coat and/or ceramic coatings may be used. In embodiments, the bond coat may comprise a nickel based alloy such as PWA 1386, which can be applied to the component via a low pressure plasma spray (LPPS) or high velocity oxy fuel (HVOF) process. In embodiments, the ceramic coating may comprise a yttrium oxide stabilized zirconium oxide material such as PWA 1375, which can be applied to the component via air plasma spray (APS).

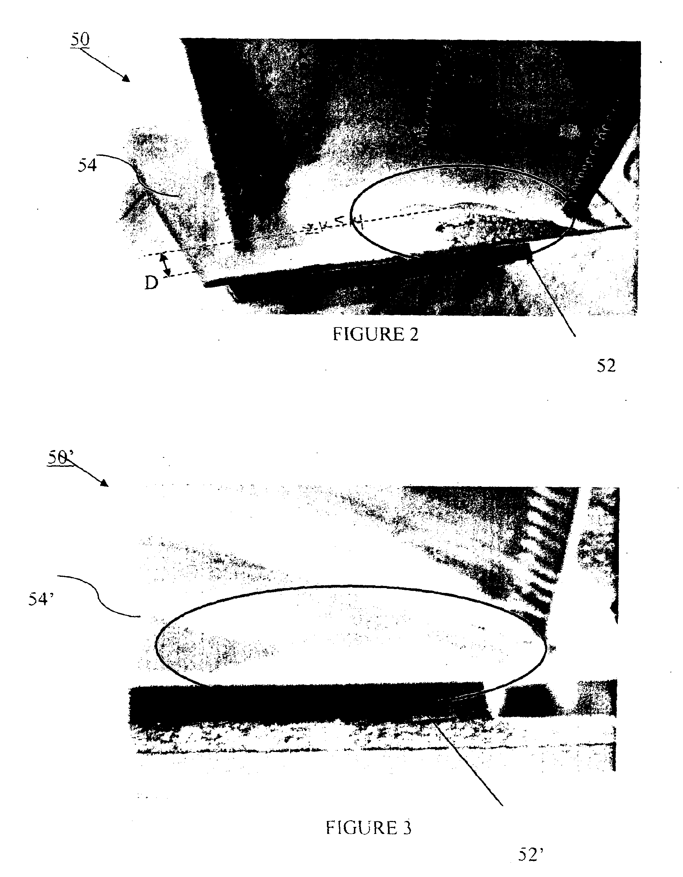

Referring now to Figure 2, there is shown an exemplary damaged turbine blade 50 in need of repair. This blade has damage 52 on its platform 54 that needs to be repaired before this blade can be returned to service in an engine.

Referring now to Figure 3, there is shown an exemplary damaged turbine blade 50' that has been repaired by embodiments of this invention as described above. This blade had damage 52' on its platform 54' repaired so this blade can be returned to service in an engine.

As described above, this invention provides systems and methods for repairing metallic components, particularly damaged turbine blades. Advantageously, these systems and methods allow previously unrepairable components to be repaired. Many other embodiments and advantages will be apparent to those skilled in the relevant art.

Various embodiments of this invention have been described in fulfillment of the various needs that the invention meets. It should be recognized that these embodiments are merely illustrative of the principles of various embodiments of the present invention. Numerous modifications and adaptations thereof will be apparent to those skilled in the art without departing from the scope of the present invention. Thus, it is intended that the present invention cover all suitable modifications and variations as come within the scope of the appended claims and their equivalents.

## Claims

1. A method for repairing a damaged metallic component (50) comprising:
removing coatings from the component at least in the area proximate the damage (52);
removing the damage (52) from the component (50);
welding the component (50) to restore the component (50) to at least the original dimensions of the component (50);
returning the dimensions of the component back to the original dimensions of the component (50);
heat treating the component (50);
inspecting the component (50); and
recoating the component (50) where needed.

2. The method of claim 1, wherein the metallic component (50) comprises a turbine blade.

3. The method of claim 1 or 2, wherein the metallic component (50) comprises at least one of the following materials: PWA 1483, GTD-111, and IN-738.

4. The method of claim 1, 2 or 3, wherein the damage (52) comprises at least one of: a crack, corrosion, erosion, a burned area, and foreign object damage.

5. The method of any preceding claim, wherein the damage (52) is removed from the component (50) via at least one of: blending, grinding, and machining.

6. The method of any preceding claim, wherein the welding step comprises at least one of: gas tungsten arc welding and laser welding.

7. The method of any preceding claim, wherein the welding step utilizes at least one of: PWA 795, Inconel 617, IN-939, and Inconel 625.

8. The method of claim 7, wherein the welding step utilizes at least one of: a wire material and a powder material.

9. The method of any preceding claim, wherein the dimensions of the component (50) are returned back to the original dimensions of the component via at least one of: blending, grinding, and machining.

10. The method of any preceding claim, wherein the heat treating step comprises heating the component to about 2050-2175°F (about 1121 - 1191°C) for about 2-4 hours.

11. The method of claim 10, wherein the heat treating step further comprises at least one of:
rapid quenching the component to below about 1000°F (about 1121°C); and
control cooling the component at about 3-40°F (about 1.7 - 22.2°C)/minute to below about 1000°F (about 1121°C).

12. The method of any preceding claim, wherein the heat treating step comprises heating the component to about 2050°F (about 1121°C) and holding at that temperature for about 4 hours.

13. The method of claim 12, wherein the heat treating step occurs under vacuum at about 5x10⁻⁴ torr minimum.

14. The method of any preceding claim, wherein the inspecting step comprises utilizing fluorescent penetrant inspection.

15. The method of any preceding claim, wherein the recoating step comprises at least one of:
(a) applying a ceramic coating on the component (50); and
(b)
(1) applying a bond coat on the component (50); and
(2) applying a ceramic coating over the bond coat.

16. The method of claim 15, wherein the bond coat is applied via at least one of: LPPS and HVOF.

17. The method of claim 16, wherein the bond coat comprises PWA 1386.

18. The method of claim 15, 16 or 17, wherein the ceramic coating is applied via APS.

19. The method of claim 18, wherein the ceramic coating comprises PWA 1375.

20. A method of repairing a damaged metallic component (50) comprising:
removing coatings from the component (50) at least in the area proximate the damage (52);
cleaning the component (50);
removing the damage (52) from the component (50);
restoring the component (50) to at least the original dimensions of the component (50);
returning the dimensions of the component (50) back to the original dimensions of the component (50);
heat treating the component (50);
inspecting the component (50); and
recoating the component (50) where needed.
